# EUROPÄISCHE PATENTSCHRIFT

(11) **EP 2 736 722 B1**
(45) Veröffentlichungstag und Bekanntmachung des Hinweises auf die Patenterteilung: **23.03.2016**
(21) Anmeldenummer: 12743377.9
(22) Anmeldetag: 24.07.2012
(51) Int. Cl.: B42D 15/08

(54) **VERFAHREN ZUR HERSTELLUNG EINES KARTENKÖRPERS**
METHOD FOR PRODUCING A CARD BODY
PROCÉDÉ DE FABRICATION D'UN CORPS DE CARTE

(30) Priorität: 26.07.2011 DE 102011108531
(43) Veröffentlichungstag der Anmeldung: 04.06.2014
(73) Patentinhaber: Giesecke & Devrient GmbH, 81677 München (DE)
(72) Erfinder: SEGURA, Maria del Mar, E-08810 Sant Pere de Ribes (Barcelona) (ES); REDONDO, Gemma, E-08940 Cornella de Llobregat (Barcelona) (ES)
(86) Internationale Anmeldenummer: PCT/EP2012/003117
(87) Internationale Veröffentlichungsnummer: WO 2013/013810

(56) Entgegenhaltungen:
- EP-A1- 0 857 749
- WO-A1-2008/142064
- JP-A- 5 062 031
- US-B1- 6 248 199

## Beschreibung

Die Erfindung betrifft die Herstellung eines Kartenkörpers für tragbare Datenträger, der auf Kohlefaser basiert. Insbesondere betrifft die Erfindung die Herstellung von Kartenkörpern für tragbare Datenträger im Kredit- oder Chipkartenformat.

Kartenförmige tragbare Datenträger im Kreditkartenformat sind weit verbreitet. Sie werden insbesondere als Zahl- oder Ausweiskarten oder, in kleineren Formaten, als Authentifizierungs- oder Speicherkarten eingesetzt. Der größte Teil der Karten ist mit einem Magnetstreifen und/ oder einem Mikroprozessor sowie einer Datenschnittstelle für Lesegerät ausgestattet, die es ermöglichen mit Hilfe der Karte Datenverarbeitungsaufgaben durchzuführen. Die Mikroprozessor-ICs sind u.a. durch eine sehr kleine Baugröße besonders manipulationssicher ausgeführt, verfügen aber im Vergleich zu gängigen Standardmikroprozessoren etwa für PCs über eine stark eingeschränkte Rechenleistung, sie sind mithin ressourcenbeschränkt. Karten der genannten Art verfügen in der Regel über keine oder allenfalls über eine reduzierte Benutzerschnittstelle etwa in Form eines einzeilen Displays und/ oder einer kleinen Anzahl von Tasten und/ oder eines Sensors zur Erfassung eines biometrischen Merkmals. Die Herstellung von Karten der vorgenannten Art ist ebenfalls hinlänglich bekannt, z.B. aus dem "Handbuch der Chipkarten", W. Rankl, W. Effing, 5. Auflage, 2008, Karl Hanser Verlag München oder dem Buch vom "Plastik zur Chipkarte", T. Tarantino, Y. Haghiri, 1999, Karl Hanser Verlag München. Die Karten werden danach typischerweise aus mehreren Schichten von Kunststoffen aufgebaut, die durch Laminieren miteinander verbunden werden. Übliche Kunststoffe sind insbesondere PVC, Polycarbonat oder Kunststoffe auf Polyesterbasis. Bekannt ist auch die Nutzung von Papier oder von biologisch abbaubaren Materialien zum Kartenaufbau. Eine gängige Alternative zum Laminieren mehrschichtiger Karten ist die Herstellung von Karten in Spritzgusstechnik. Die bekannten Herstellungsverfahren erlauben eine kostengünstige Großserienherstellung von Karten gemäß den jeweils einschlägigen Normen, etwa der Norm ISO 7810 für Chipkarten.

Die Eigenschaften der nach den bekannten Verfahren hergestellten Karten, insbesondere die physischen und haptischen Eigenschaften, lassen sich durch Auswahl geeigneter Materialien in einem gewissen Spektrum beeinflussen. Beispielsweise kann eine größere oder eine kleinere Biegesteifigkeit hergestellt werden oder es können härtere oder weichere Oberflächen geschaffen werden. Auch das Gewicht einer Karte lässt sich in gewissen Grenzen beeinflussen. Obgleich somit ein durchaus nennenswerter Spielraum für die physische Gestaltung der Karten gegeben ist, besteht dennoch das Bedürfnis weitere Kartenausführungen zu schaffen, die sich von den bekannten abheben.

Aus der JP 05-062031 A ist der Vorschlag bekannt eine IC-Karten herzustellen, deren Kartenkörper ähnlich steif wie ist das IC-Modul, so daß dieses auch bei wiederholten Biegebelastungen nicht aus der Modulkavität gelöst wird. Als Kartensubstrat wird hierzu eine Kohlefaser-Aluminium-Legierung verwendet. Ein besonderer Herstellungsprozeß ist nicht vorgesehen.

Aus der DE 102 02 125 A1 ist weiter eine mehrschichtige Chipkarte mit einem Energiespeicher bekannt, bei der zumindest eine Schicht über und/ oder unter dem Energiespeicher als hochfeste Folie ausgeführt ist. Die hochfeste Folie kann ein Kohlefaserverbundwerkstoff sein. Die hochfeste Folie deckt insbesondere den Energiespeicher ab und weist über einigen Bauelementen der Chipkarte vorgefertigte Ausnehmungen auf. Sie kann durch Kleben oder Heißlaminieren mit dem Energiespeicher verbunden sein. Die hochfeste Folie sorgt dafür, dass die gesamte Chipkarte eine hohe Stabilität gegen Biege- und Druckbeanspruchung besitzt, insbesondere im Bereich des Energiespeichers. Es können zwei hochfeste Folien auf beiden Seiten des Energiespeichers vorgesehen sein.

Aufgabe der Erfindung ist es ein Verfahren anzugeben, mit dem eine Karte herstellbar ist, die sich in ihrer physischen und haptischen Beschaffenheit deutlich von bekannten Karten unterscheidet.

Diese Aufgabe wird gelöst durch ein Verfahren mit den Merkmalen des Hauptanspruchs. Ein nach dem erfindungsgemäßen Verfahren hergestellter Kartenkörper besitzt eine besonders hohe Steifigkeit und ist an dem Klang, der beim Fall auf eine harte Grundlage mit Aufprall auf einer Ecke oder einer Kante entsteht, leicht identifizierbar. Das erfindungsgemäße Verfahren hat den Vorteil, dass die hergestellte Karte das verwendete Kohlefasermaterial offenbart und trotzdem eine ausreichend hohe Opazität besitzt. Es hat weiter den Vorteil, dass die Kanten der hergestellten Kartenkörper glatt sind und insbesondere Auffaserungen des verwendeten Kohlefasermaterials nicht auftreten.

In einer bevorzugten Ausführung wird zwischen zwei Kohlefaserschichten eine Kunststoffschicht, vorzugsweise aus PVC eingebracht, um die Kohlefaserkernschicht zu erzeugen. In einer vorteilhaften Ausgestaltung werden weiter beide außen liegenden Oberflächen mit einer transparenten Kunststoffschicht abgedeckt, die auflaminiert wird.

Unter Bezugnahme auf die Zeichnung wird nachfolgend ein Ausführungsbeispiel der Erfindung näher erläutert.

Es zeigen:
- Fig. 1: ein Flussdiagrämm der Herstellung eines Kartenkörpers und
- Fig. 2: einen Querschnitt durch einen verfahrensgemäß hergestellten Kartenkörper, und
- Fig. 3: einen Querschnitt durch einen alternativen verfahrensgemäß hergestellten Kartenkörper.

Für die folgende Beschreibung wird davon ausgegangen, dass ein Kartenkörper für eine Chipkarte mit üblichen äußeren Abmessungen gemäß der Norm 7810 - Länge: 85,72 mm, Breite: 54,03 mm, Dicke: 0,76 mm - hergestellt wird. Das Verfahren lässt sich in gleicher Weise aber auch zur Herstellung von tragbaren Datenträgern mit anderen Abmessungen einsetzen. Beispielsweise können auf dieselbe Weise auch tragbare Datenträger im kleineren SIM-Kartenformat, dem sogenannten ID-000 Format, hergestellt werden, oder ebenso dickere tragbare Datenträger in einer langgezogenen Rechteckform, die z.B. zusammen mit einem Gehäuse als USB-Stick dienen.

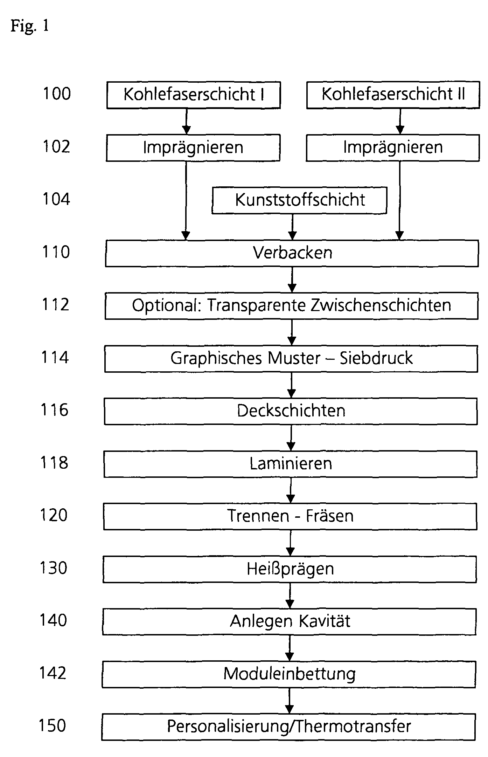

Das Verfahren ist in Fig. 1 als Flussdiagramm veranschaulicht. Es setzt ein, indem vorzugsweise zwei Kohlefaserschichten 2, 4 mit einer Dicke von 50 bis 300 µm bereitgestellt werden, Schritt 100. Die Kohlefaserschichten 2, 4 können als Mattengeflecht vorliegen. Die Kohlefaserschichten 2, 4 werden anschließend durch Tränken in Kunstharz imprägniert. Geeignete Kunstharze sind z.B. duroplastische Epoxyharze, Schritt 102. In einer zweckmäßigen Ausgestaltung haben die Kohlefaserschichten 2, 4 zusammen eine Stärke von 50% bis 75%, bevorzugt 60% bis 70%, der Gesamtdicke der Kernstruktur 10; zweckmäßig besitzen die Kohlefaserschichten 2, 4 dabei dieselbe Dicke. In einer Kernstruktur 10 mit einer Dicke von 660 µm beträgt die Dicke der Kohlefaserschichten 2, 4 also jeweils z.B. ca. 215 µm, zusammen mithin ca. 330 µm.

Desweiteren wird eine Schicht 3 aus einem Kunststoff bereitgestellt, Schritt 104. Zweckmäßig kann es sich bei dem Kunststoff um PVC oder ein anderes Kunststoffpolymer handeln. Die Kunststoffschicht 3 hat eine Dicke von 100 bis 600 µm. Sie ist opak gemäß ISO/IEC 7810:2003 und hat zweckmäßig die Eigenfarbe des imprägnierten Kohlefasermaterials, beispielsweise ist die Kunststoffschicht 3 schwarz.

Die Kohlefaserschichten 2, 4 und die Kunststoffschicht 3 werden in Sandwich-Anordnung übereinander angeordnet, so dass die Kunststoffschicht 3 zwischen den Kohlefaserschichten 2, 4 liegt. In dieser Anordnung werden die Schichten 2, 3, 4 miteinander verbacken, Schritt 110. Die Schichten 2, 3, 4 werden hierzu zunächst bei einer Temperatur von ca. 20° C übereinandergelegt und anschließend auf ca. 60° C erwärmt. Es entsteht die Kernstruktur 10 des Kartenkörpers.

Die Kerristruktur 10 kann grundsätzlich auch mit nur einer Kohlefaserschicht 2 hergestellt in einem asymmetrischen Aufbau werden. Sie ist dann dünner, weist aber entsprechend zwei unterschiedliche Oberflächen auf. Für diese Beschreibung wird stets der gegenwärtig relevantere Fall eines symmetrischen Aufbaus zugrundegelegt.

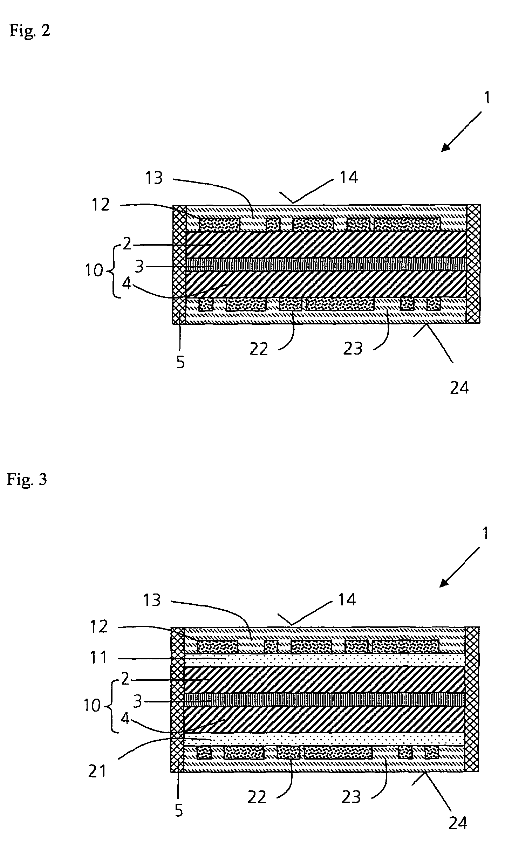

In einer Ausführungsvariante, die in Fig. 3 gezeigt ist, werden in einem optionalen nachfolgenden Schritt 112 auf die Oberseiten der Kernstruktur 10 transparente Zwischenschichten 11, 21 mit einer Stärke von 10 bis 300 µm, vorzugsweise von 50 bis 200 µm auflaminiert. Das Laminieren geschieht unter Bedingungen, wie sie bei der Herstellung von Chipkarten üblich sind. Die Schichten 11, 21 dienen als Untergrund für den nachfolgenden Bedruckungsschritt.

In folgenden Schritt 114 wird auf eine oder beide Seiten der Kernstruktur 10 in einem Siebdruckprozeß ein graphisches Muster 12, 22 aufgebracht. Das graphische Muster kann Flächen, Strukturen und/ oder alphanumerische Zeichen umfassen. Das graphische Muster 12, 22 kann auf den Seiten unterschiedlich ausgeführt sein.

Zur weiteren Verarbeitung des danach vorliegenden Halbzeuges werden zwei transparente oder zumindest transluzente Deckschichten 13, 23 bereitgestellt, Schritt 116. Die Deckschichten 13, 23 sind dünner als die Kernstruktur 10 und besitzen ein Dicke von typischerweise 10 bis 150 µm. Sofern der fertige Datenträger 1 einen Magnetstreifen besitzen soll, wird eine der Deckschichten mit einem Magnetstreifen ausgestattet. Die Deckschichten 13, 23 können aus PVC oder einem anderen transparenten Kunststoffmaterial bestehen.

Im folgenden Schritt 118 werden die Deckschichten 13 und das Kohlefaserhalbzeug in einem für die Herstellung von Chipkarten üblichen Laminierverfahren mit üblichen Laminierparametern miteinander verbunden. Nach Ausführung des Schrittes 118 liegt ein flächiges, mehrschichtiges Kartenhalbzeug vor, das aus der mit einem graphischen Muster 12, 22 versehenen Kernstruktur 10 besteht, die beidseitig mit einer dünnen transparenten bzw. transluzenten Deckschicht 13, 23 abgedeckt ist. Die Oberflächen 14, 24 des Kartenhalbzeugs entsprechen bis auf eine nachfolgende Personalisierung und/oder die Einbringung eines ICs den endgültigen Oberflächen 14, 24 des fertigen tragbaren Datenträgers 1. Ebenso entspricht die Dicke des Halbzeuges bereits der Dicke der fertigen Chipkarte, bei einer Chipkarte mit Normmaßen beträgt sie also z.B. 760 µm.

Im folgenden Schritt 120 wird aus dem flächigen Kartenhalbzeug ein Kartenkörper mit der für den Datenträger 1 vorgesehenen äußeren Endform herausgetrennt. Das Trennen geschieht mit Hilfe eines Trennwerkzeugs, das im wesentlichen senkrecht zur Hauptebene des Kartenhalbzeuges angreift und entlang einer die Randkontur des herzustellenden Kartenkörpers beschreibenden Bahn geführt wird. Das Trennwerkzeug ist insbesondere ein Fräswerkzeug, das z.B. mit 56.000 U/min betrieben wird; daneben kommen, allerdings etwas eingeschränkt, da Kohlefaser sehr abrasiv ist und leicht zu einem hohen Werkzeugverschleiß führt, auch sägende Werkzeuge in Betracht. Das Trennwerkzeug wird so betrieben, dass durch die beim Trennen auftretende Reibungswärme ein Verschmelzen der übereinander liegenden Schichten 2,3,4,13, 23 an der entstehenden vertikalen Außenkante 5 erfolgt.

Sofern der herzustellende tragbare Datenträger dem Typ nach eine Chipkarte ist, erfolgen anschließend Schritte 140,142 zum Anlegen einer Kavität in dem Kartenkörper und zum Einsetzen eines Chipmoduls in die erzeugte Kavität. Ist der herzustellende tragbare Datenträger allerdings beispielsweise eine reine Magnetstreifenkarte oder ein reine Ausweiskarte ohne Mikroprozessor-IC oder Magnetstreifen, entfallen die Schritte 140,142.

In einem anschließenden Schritt 130 können auf den Kartenkörper in einem üblichen Heißprägeverfahren Heißprägeelemente aufgebracht werden.

Der danach vorliegende Kartenkörper wird schließlich in einem Schritt 150 personalisiert. Dies geschieht beispielsweise durch Aufbringung von personenbezogenen Daten in einem Thermotransferverfahren und/ oder durch Kerben; andere an sich bekannte Personalisierungsverfahren können ebenfalls eingesetzt werden.

Fig. 2 zeigt einen Querschnitt durch einen verfahrensgemäß hergestellten Kartenkörper 1. Die Dicken der einzelnen Schichten sind dabei nicht maßstabsgerecht. Der Kartenkörper 1 besteht aus einer Kernstruktur, die ihrerseits aus zwei Kohlefaserschichten 2, 4 besteht, zwischen denen eine opake Kunststoffschicht 3 angeordnet ist. Die Kernstruktur 10 ist auf beiden nach außen weisenden Seiten mit graphischen Mustern 12, 22 versehen, auf die abschließend auf beiden Seiten jeweils eine weitere Kunststoffschicht 13, 23 ausgebildet ist. Der vertikale Außenrand 5 besitzt eine ebene und glatte Oberfläche.

Die in Fig. 3 gezeigte Variante besitzt zusätzlich zwei transparente Zwischenschichten 11, 21, die jeweils zwischen der Kernstruktur 10 und den Deckschichten 13, 23 angeordnet sind.

Ohne den erfindungsgemäßen Grundgedanken zu verlassen gestattet das vorbeschriebene Verfahren eine Reihe von Abwandlungen und Ausgestaltungen. Insbesondere kann statt zwei Kohlefaserschichten auch nur eine Kohlefaserschicht verwendet werden. Ebenso ist es möglich drei oder mehr Kohlefaserschichten zu verwenden und dann entsprechend die Zahl der dazwischen eingebrachten Kunststoffschichten zu erhöhen. Die Kunststoffdeckschichten 13, 23 können auch beide oder einzeln weggelassen werden oder es können über die Deckschichten jeweils weitere Schichten aufgebracht werden. Der Schritt des Trennens kann auch durch Kombination mit anderen Trennungstechniken erfolgen, etwa durch zusätzliche Anwendung eines Lasers oder durch Vorstanzen der Randkontur.

## Patentansprüche

1. Verfahren zum Herstellen eines steifen mehrschichtigen Kartenkörpers für einen tragbaren Datenträger mit folgenden Schritten:
- Bereitstellen einer Schicht (3) aus einem opaken Kunststoff (104),
- Bereitstellen einer Kohlefaserschicht (2, 4) aus Kohlefasergewebe (102),
- Imprägnieren der Kohlefaserschicht (2, 4) mit Eopxy-Harz (102),
- Verbacken der Schichten (2, 3, 4) zu einem Halbzeug (110),
- Bedrucken der Oberseite der Kohlefaserschicht des Halbzeuges mit einem graphischen Muster (12) in einem Siebdruck- oder einem Offsetdruckprozeß (114),
- Heraustrennen des Kartenkörpers (1) aus dem Halbzeug mittels eines Trennwerkzeuges, das relativ zu dem Halbzeug entlang einer die Randkontur des Kartenkörpers (1) beschreibenden Bahn geführt wird.

2. Verfahren nach Anspruch 1, **dadurch gekennzeichnet, dass** auf die bedruckte Oberseite (118) eine Kunststoffschicht (13) auflaminiert wird.

3. Verfahren nach Anspruch 1, **dadurch gekennzeichnet, dass** zwei Kohlefaserschichten (2, 3) bereitgestellt werden und die Kunststoffschicht (3) beim Laminieren zwischen den Kohlefaserschichten (2, 4) angeordnet wird.

4. Verfahren nach Anspruch 3, **dadurch gekennzeichnet, dass** auf die Rückseite der Kohlefaserschichten (2,4) des Halbzeuges ebenfalls ein graphisches Muster (22) aufgebracht und eine Kunststoffschicht (23) auflaminiert wird.

5. Verfahren nach einem der vorhergehenden Ansprüche, **dadurch gekennzeichnet, dass** die Temperatur beim Verbacken 20 bis 60°C beträgt.

6. Verfahren nach einem der vorhergehenden Ansprüche, **dadurch gekennzeichnet, dass** die Kunststoffschicht (13, 23) transparent ist.

7. Verfahren nach einem der vorhergehenden Ansprüche, **dadurch gekennzeichnet, dass** das Heraustrennen mittels eines Fräswerkzeuges erfolgt.

8. Verfahren nach einem der vorhergehenden Ansprüche, **dadurch gekennzeichnet, dass** der Kartenkörper (1) heißgeprägt wird.

9. Verfahren nach einem der vorhergehenden Ansprüche, **dadurch gekennzeichnet, dass** der Kartenkörper (1) durch ein Thermotransfer- oder ein Kerbverfahren personalisiert wird.

10. Verfahren nach einem der vorhergehenden Ansprüche, **dadurch gekennzeichnet, dass** der Kunststoff PVC ist.

11. Verfahren nach einem der vorhergehenden Ansprüche, **dadurch gekennzeichnet, dass** die Kohlefaserschichten (2, 4) zusammen eine Stärke von 50% bis 75%, bevorzugt 60% bis 70%, der Gesamtdicke der zu einem Halbzeug verbackenen Schichten (2, 3, 4) aufweisen.

12. Kartenkörper für einen tragbaren Datenträger mit einer Kernstruktur, welche aus zwei Kohlefaserschichten (2, 4) besteht, zwischen denen eine opake Kunststoffschicht (3) angeordnet ist.

13. Kartenkörper nach Anspruch 12, **dadurch gekennzeichnet, dass** die Kernstruktur (10) auf beiden nach außen weisenden Seiten mit graphischen Mustern (12, 22) versehen ist, und darüber jeweils eine weitere Kunststoffschicht (13, 23) ausgebildet ist.

## Claims

1. A method for manufacturing a stiff, multilayer card body for a portable data carrier having the following steps of:
- making available a layer (3) of an opaque plastic (104),
- making available a carbon fiber layer (2, 4) of carbon fiber fabric (102),
- impregnating the carbon fiber layer (2, 4) with epoxy resin (102),
- fusing the layers (2, 3, 4) to form a semifinished product (110),
- printing the upper side of the carbon fiber layer of the semifinished product with a graphic pattern (12) in a screen printing process or an offset printing process (114),
- detaching the card body (1) from the semifinished product by means of a separating tool that is guided relative to the semifinished product along a path describing the edge contour of the card body (1).

2. The method according to claim 1, **characterized in that** onto the printed upper side (118) a plastic layer (13) is laminated.

3. The method according to claim 1, **characterized in that** two carbon fiber layers (2, 3) are made available and the plastic layer (3) is arranged between the carbon fiber layers (2, 4) upon lamination.

4. The method according to claim 3, **characterized in that** to the back side of the carbon fiber layers (2, 4) of the semifinished product likewise a graphic pattern (22) is applied and a plastic layer (23) is laminated on.

5. The method according to any of the preceding claims, **characterized in that** the temperature upon fusion amounts to 20 to 60°C.

6. The method according to any of the preceding claims, **characterized in that** the plastic layer (13, 23) is transparent.

7. The method according to any of the preceding claims, **characterized in that** the detachment takes place by means of a milling tool.

8. The method according to any of the preceding claims, **characterized in that** the card body (1) is hot embossed.

9. The method according to any of the preceding claims, **characterized in that** the card body (1) is personalized by a thermal transfer procedure or a notching procedure.

10. The method according to any of the preceding claims, **characterized in that** the plastic is PVC.

11. The method according to any of the preceding claims, **characterized in that** the carbon fiber layers (2, 4) together have a thickness of 50% to 75%, preferably 60% to 70%, of the total thickness of the layers (2, 3, 4) fused to from a semifinished product.

12. A card body for a portable data carrier with a core structure consisting of two carbon fiber layers (2, 4) between which an opaque plastic layer (3) is arranged.

13. The card body according to claim 12, **characterized in that** the core structure (10) is supplied with graphic patterns (12, 22) on both outwardly facing sides, and respectively a further plastic layer (13, 23) is formed thereabove.

## Revendications

1. Procédé de fabrication d'un corps de carte multicouche rigide destiné à un support de données portable, comprenant les étapes suivantes:
- mise à disposition d'une couche (3) en une matière plastique opaque (104),
- mise à disposition d'une couche de fibres de carbone (2, 4) en tissu de fibres de carbone (102),
- imprégnation de la couche de fibres de carbone (2, 4) avec de la résine époxy (102),
- cuisson des couches (2, 3, 4) de façon à obtenir un semi-fini (110),
- impression de la face de dessus de la couche de fibres de carbone du semi-fini avec un motif graphique (12) dans un processus de sérigraphie ou d'impression offset (114),
- découpage du corps de carte (1) à partir du semi-fini au moyen d'un outil de découpage qui, relativement au semi-fini, est guidé le long d'une trajectoire décrivant le contour marginal du corps de carte (1).

2. Procédé selon la revendication 1, **caractérisé en ce que**, sur la face de dessus (118) imprimée, une couche en matière plastique (13) est laminée.

3. Procédé selon la revendication 1, **caractérisé en ce que** deux couches de fibres de carbone (2, 3) sont mises à disposition et **en ce que** la couche en matière plastique (3) est, lors du laminage, agencée entre les couches de fibres de carbone (2, 4).

4. Procédé selon la revendication 3, **caractérisé en ce que**, sur la face arrière des couches de fibres de carbone (2, 4) du semi-fini, également un motif graphique (22) est appliqué et une couche en matière plastique (23) est laminée.

5. Procédé selon une des revendications précédentes, **caractérisé en ce que** la température, lors de la cuisson, est de 20 à 60°.

6. Procédé selon une des revendications précédentes, **caractérisé en ce que** la couche en matière plastique (13,23) est transparente.

7. Procédé selon une des revendications précédentes, **caractérisé en ce que** le découpage a lieu au moyen d'un outil de fraisage.

8. Procédé selon une des revendications précédentes, **caractérisé en ce que** le corps de carte (1) est gaufré à chaud.

9. Procédé selon une des revendications précédentes, **caractérisé en ce que** le corps de carte (1) est personnalisé par un procédé de thermotransfert ou d'entaillage.

10. Procédé selon une des revendications précédentes, **caractérisé en ce que** la matière plastique est du PVC.

11. Procédé selon une des revendications précédentes, **caractérisé en ce que** les couches de fibres de carbone (2, 4) présentent ensemble une épaisseur située entre 50% et 75%, de préférence entre 60% et 70% de l'épaisseur totale des couches (2, 3, 4) cuites de façon à obtenir un semi-fini.

12. Corps de carte destiné à un support de données portable, ayant une structure d'âme consistant en deux couches de fibres de carbone (2, 4) entre lesquelles une couche en matière plastique (3) opaque est agencée.

13. Corps de carte selon la revendication 12, **caractérisé en ce que** la structure d'âme (10) est, sur les deux faces orientées vers l'extérieur, pourvue de motifs graphiques (12, 22), et **en ce que**, par-dessus cela, respectivement une couche en matière plastique (13, 23) supplémentaire est réalisée.
